# EUROPEAN PATENT SPECIFICATION

(11) **EP 3 964 710 B1**
(45) Date of publication and mention of the grant of the patent: **04.09.2024**
(21) Application number: 21189744.2
(22) Date of filing: 04.08.2021
(51) Int. Cl.: F04B 23/02, F04B 49/10, F04C 2/344, F16H 61/00

(54) **PUMP UNIT, IN PARTICULAR FOR A TRANSMISSION IN THE DRIVETRAIN OF A MOTOR VEHICLE**
PUMPENEINHEIT, INSBESONDERE FÜR EIN GETRIEBE IM ANTRIEBSSTRANG EINES KRAFTFAHRZEUGS
UNITÉ DE POMPE, EN PARTICULIER POUR UNE TRANSMISSION DANS LA CHAÎNE CINÉMATIQUE D'UN VÉHICULE À MOTEUR

(30) Priority: 26.08.2020 DE 102020122260
(43) Date of publication of application: 09.03.2022
(73) Proprietor: Valeo Powertrain GmbH, 96106 Ebern (DE)
(72) Inventor: HEUBNER, Wilhelm, D-96106 Ebern (DE)
(74) Representative: Valeo Powertrain Systems

(56) References cited:
- EP-A1- 3 627 004
- DE-A1- 102012 113 102
- DE-A1- 102016 116 942
- DE-A1- 102018 122 306

## Description

The invention relates to a pump unit that can be used for actuating clutches in the drivetrain of a motor vehicle. In particular, the drivetrain may be a drivetrain for a hybrid vehicle, that is to say a vehicle in which both a combustion motor and an electric motor are used. By means of the pump unit, the hydraulic flows required for actuating the various clutches can be provided, and a lubricant and/or coolant flow required for lubricating and/or cooling various components can be provided.

DE102012113102A1 discloses a hydraulic pressure supply system of an automatic transmission. In a first embodiment a first low pressure pump sucks a fluid from a reservoir via a line and supplies hydraulic fluid to a low pressure portion via a second line. A second pump, independent of the first pump, is a high pressure pump and draws the fluid from the low pressure line and supplies a portion at high pressure. The two pumps are simple pumps with a suction and a delivery. The second embodiment discloses a hydraulic pump which combines in the same pump the functions of the pumps of the first embodiment.

The object of the invention consists in creating a particularly compact pump unit which combines a multiplicity of different functions.

According to the invention, to achieve this object, a pump unit is provided, having a dual pump which has a suction port for drawing in from an external fluid reservoir and has a high-pressure outlet and a low-pressure outlet which lead to a first control port and to at least one lubricant/coolant port, respectively, of the pump unit, and having a high-pressure pump which draws in from an internal fluid reservoir and which has two high-pressure outlets which lead to a second and a third control port of the pump unit, wherein, between the high-pressure outlet of the dual pump and the first control port, there is arranged a control valve which has a return line which leads into the internal fluid reservoir. This pump unit has the advantage that it combines two different pumps, such that the overall installation process is simplified, because only a single component has to be installed. The pumps are different pumps, such that different types of fluid flows can be provided. The dual pump delivers both a low-pressure flow and a high-pressure flow, wherein the conveyed volume of the low-pressure flow is greater than the conveyed volume of the high-pressure flow. The low-pressure flow may be used for lubricating bearing points of the transmission or for cooling clutches or the electric motor. The high-pressure flow may be used for actuating a clutch. This also applies to the two high-pressure flows that are provided from the high-pressure outlets of the high-pressure pump. The return line of the control valve that is integrated into the pump unit makes it possible for the conveyed flow that is not required at the high-pressure port to be conducted directly into the internal fluid reservoir, such that the internal fluid reservoir is always sufficiently filled and the pump unit requires, overall, only one suction port to the outside.

According to one refinement of the invention, it is provided that the suction port of the pump unit and/or the high-pressure outlet of the dual pump is assigned a filter. This ensures that the high-pressure pump draws in only pre-filtered hydraulic fluid.

The dual pump may be a rotary vane pump having multiple rotary vanes which, together with a stator and a rotor, delimit multiple low-pressure chambers, wherein each rotary vane delimits a high-pressure chamber within the rotor. With a rotary vane pump configured in this way, it is possible for two different hydraulic oil flows to be provided, specifically firstly the "normal" low-pressure flow, which is provided by means of the conveying chambers of varying volume that are formed between adjacent rotary vanes. Secondly, it is also possible for a high-pressure flow to be generated by virtue of the rotary vanes acting as pistons of a piston pump, the pump chambers of which are delimited by the walls of the receiving slots for the rotary vanes in the rotor, by the face walls of the rotary vane pump and by a face side of the rotary vanes.

According to one refinement of the invention, a disconnection valve is provided which is arranged between the high-pressure outlet of the dual pump and the control valve of the first control port of the pump unit and the return line of which leads into the internal fluid reservoir. Losses are avoided in this way, because the dual pump cannot simply be shut off if, in the case of a clutch that can be actuated without leakage, the pressure can be maintained by means of the proportional valve; with regard to the lubricating and cooling requirements, the dual pump must normally be operated continuously.

In one embodiment of the invention, a shut-off valve is provided which is arranged between the low-pressure outlet of the dual pump and one of the lubricant/coolant ports of the pump unit. By means of the shut-off valve, the lubricating/cooling oil flow to a clutch can be shut off when said clutch does not require cooling. In this way, drag losses in the corresponding clutch are reduced.

In order to ensure that a minimum flow rate of a lubricating/cooling oil flow is maintained, a bypass line for the shut-off valve may be provided, wherein an aperture is arranged in the bypass line. With this configuration, a defined oil flow is provided, which is advantageous in particular if the clutch has hydraulic compensation chambers that should remain filled to a defined level.

In one embodiment of the invention, between the low-pressure outlet of the dual pump and one of the lubricant/coolant ports, there is arranged a build-up valve, the outlet of which is connected to the return lines of control valves that are arranged between one of the high-pressure ports of the high-pressure pump and the second and third control port respectively. By means of the build-up valve, a low-pressure oil flow can be conducted "backwards" through the control valves to the control ports and the actuators that are provided for switching the clutches. This makes it possible for the actuators, in the event of a switching demand, to be pre-filled very quickly up to a point at which the further supply of pressure is taken over by the high-pressure pump. This reduces the switching times.

The invention also provides a drive assembly having a transmission, having a separating clutch by means of which an electric motor can be coupled to and separated from the transmission, and having a pump unit of the above-stated type, wherein the suction port of the pump unit is connected to an oil collecting volume of the transmission, and one of the lubricant/coolant ports is used for the cooling of the rotor and of the stator. The particular advantage of this drive assembly consists in that only a single pump unit has to be installed, which draws in hydraulic oil from an oil collecting volume of the transmission and provides both the various hydraulic oil flows for the switching of the various clutches and an oil flow of relatively low pressure, but relatively high volumetric flow rate, which can be used for the cooling of clutches, bearing points and of the electric motor.

According to one refinement of the invention, it is provided that one of the lubricant/coolant ports is assigned a heat exchanger. By means of said heat exchanger, the temperature of the cooling oil flow that is conducted to the electric motor can be reduced, which has a particularly great effect on the efficiency of the electric motor.

In one embodiment, the low-pressure outlet of the dual pump provides a supply to at least two lubricant/coolant ports, wherein at least one of the lubricant/coolant circuits to which a supply is thereby provided is assigned a restrictor or an aperture. By means of the restrictor or aperture, it can be defined what proportion of the volumetric flow rate flows through which of the lubricant/coolant circuits.

The invention will be described below on the basis of various embodiments, which are illustrated in the appended drawings. In these drawings:
- Figure 1 schematically shows an assembly according to the invention with a pump unit according to the invention according to a first embodiment;
- Figure 2 schematically shows an example of a dual pump that is used in the first embodiment;
- Figure 3 schematically shows a drive assembly and a pump unit according to a second embodiment of the invention;
- Figure 4 schematically shows a drive assembly and a pump unit according to a third embodiment of the invention;
- Figure 5 schematically shows a drive assembly and a pump unit according to a fourth embodiment of the invention;
- Figure 6 schematically shows a drive assembly and a pump unit according to a fifth embodiment of the invention;
- Figure 7 schematically shows a drive assembly and a pump unit according to a sixth embodiment of the invention;
- Figure 8 schematically shows a drive assembly and a pump unit according to a seventh embodiment of the invention;
- Figure 9 schematically shows a drive assembly and a pump unit according to a eighth embodiment of the invention;
- Figure 10 schematically shows a drive assembly and a pump unit according to a ninth embodiment of the invention; and
- Figure 11 shows a side view of a pump unit according to the invention that can be connected to further structural elements.

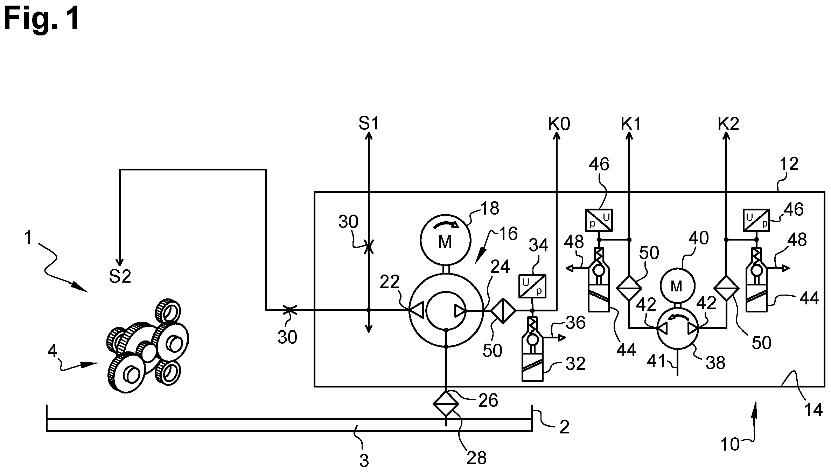

Figure 1 shows a first embodiment of a transmission 1 and of a pump unit 10 installed thereon.

Here, of the transmission 1, a part of a transmission housing 2 is shown, in which an oil collecting volume 3 is provided. Also schematically shown are multiple transmission gear wheels 4 with which different transmission ratio stages can be engaged.

The pump unit 10 has a housing 12, in the interior space of which a fluid reservoir 14 is delimited.

Arranged in the pump unit 10 is a dual pump 16, which is driven by an electric motor 18.

A "dual pump" is to be understood here to mean a hydraulic pump which has both a low-pressure outlet and a high-pressure outlet. Here, the low-pressure outlet is denoted by the reference sign 22, and the high-pressure outlet is denoted by the reference sign 24. During the operation of the dual pump 16, this delivers a hydraulic fluid flow with a high volumetric flow rate but low pressure at the low-pressure outlet 22, and a hydraulic fluid flow with a low volumetric flow rate but high pressure at the high-pressure outlet 24.

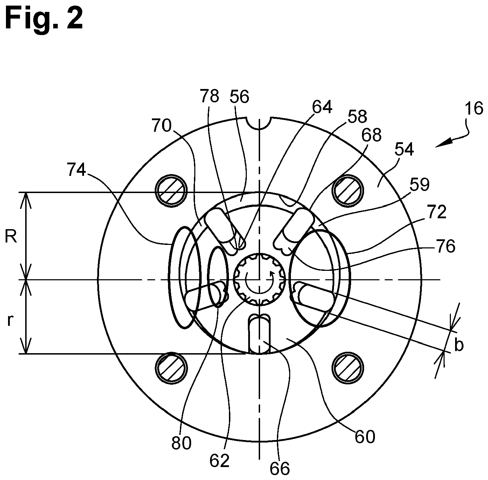

One possible configuration of the dual pump 16 will be discussed further below with reference to figure 2.

The dual pump 16 draws in hydraulic fluid from the oil collecting volume 3 of the transmission housing 2 via a suction port 26 of the pump unit 10. Here, an oil filter 28 is provided in order to ensure that no contaminants pass into the pump unit 10.

The low-pressure port 22 of the dual pump 16 serves, in general terms, for supplying hydraulic fluid to one or more lubricant/coolant ports of the pump unit 10. In the exemplary embodiment shown, two lubricant/coolant ports S1, S2 are provided, wherein the port S1 serves for the cooling of one or more clutches, and the port S2 serves for the supply of lubricant to bearing points of the transmission 1.

The ports or lines through which the lubricating/cooling fluid is provided may be assigned restrictors 30 in order to divide up the volumetric flow rates in the desired manner.

The high-pressure port 24 of the dual pump 16 supplies hydraulic fluid to a first high-pressure outlet K0 of the pump unit 10. Via the high-pressure outlet K0, it is for example possible for a separating clutch, by means of which a drive motor can be coupled and decoupled, to be switched.

For the actuation of the clutch, a control valve 32 is provided between the high-pressure outlet 24 and the high-pressure port K0, which control valve is in this case designed preferably as an electrically actuated proportional valve, which is assigned a pressure sensor 34.

When the control valve 32 is closed, the high-pressure fluid flow that is provided at the high-pressure outlet 24 of the dual pump 16 is conducted via the high-pressure outlet K0 to the clutch, or more specifically to an actuator by means of which the clutch is closed. If the control valve 32 is opened, a proportion or the entirety of the hydraulic oil flow is conducted via a return line 36 of the control valve 32 into the fluid reservoir 14 of the pump unit 10.

In the pump unit 10, there is also arranged a high-pressure pump 38 which is driven by an electric motor 40 and which draws in hydraulic fluid from the internal fluid reservoir 14 of the pump unit 10 via a drawing-in channel 41.

The high-pressure pump 38 has two high-pressure outlets 42 which serve for supplying hydraulic fluid to two further high-pressure outlets K1, K2 of the pump unit 10. The two clutches that are actuated via the high-pressure outlets K1, K2 may for example be the two clutches of a dual clutch, which can be actuated by means of the pump unit 10 such that a switch can be made from a first transmission stage to a second transmission stage of a dual-clutch transmission without an interruption in traction power.

In order to be able to suitably actuate the clutches that are assigned to the high-pressure ports K1, K2, the pump unit 10 has a second and a third control valve 44 which, like the control valve 32, are designed as solenoid-type proportional valves, and which are each assigned a pressure sensor 46.

Each of the control valves 44 has a return line 48 which, like the return line 36 of the control valve 32, leads to the internal fluid reservoir 14.

Yet further filters 50 may be arranged at various points within the pump unit 10. It is hereby ensured that only pre-filtered hydraulic oil is supplied to the internal fluid reservoir 14.

All hydraulic oil requirements within the transmission can be met by means of the pump unit 10. Dual clutches can be actuated via the high-pressure ports K1, K2, and a separating clutch can be actuated via the high-pressure port K0. It is furthermore possible for each of the clutches to be fed with a suitable cooling oil flow that is adapted to the respective requirements. For example, the thermal load of the dual clutches is higher by a factor of 5 to 10 than the thermal load of the separating clutches. Here, the high-pressure pump 38 always draws in from the internal fluid reservoir 14.

Figure 2 shows an exemplary embodiment of a dual pump 16. Here, this is a rotary vane pump with a stator 54 in which there is formed an interior space 56 which is surrounded by an inner wall 58.

A rotor 60 is arranged in the interior of the stator 54 and is mounted on a shaft 62 and can be driven by the latter.

The rotor 60 is provided with multiple receptacles 64, in which in each case one rotary vane 66 is received.

The receptacles 64 extend in the axial direction normally from a face side of the rotor 60 as far as the opposite face side, and from the outer periphery of the rotor inwards. In the exemplary embodiment shown, the receptacles 64 extend in the radial direction. This is not necessary, however.

Here, the rotary vanes are in the form of plates whose dimension in the radial direction is slightly less than the radial depth of the receptacles 64. Each of the plates has a thickness b, which corresponds to the width of the receptacles 64.

As an alternative to plate-like rotary vanes, use may also be made of rotary vanes which are in the form of a cylinder.

The rotor 60 has a diameter of 2 x r (minus a clearance between rotor and stator that is to be provided in the design), which is less than the diameter r+R of the interior space 56 of the stator 54. The rotor 60 is arranged eccentrically in the interior space, specifically such that it is (almost) in contact with the inner wall 8 on one side (at the 6 o'clock position in this case). Accordingly, the maximum spacing to the outer wall of the rotor 60 is on the diametrically opposite side.

The rotary vanes 66 bear with their radially outer side 68 permanently against the inner wall 58 of the stator 54 (at any rate when the rotor 60 is rotating). Consequently, between rotary vanes 66 adjacent to one another in the peripheral direction, the inner wall 58 of the stator 54, the outer wall of the rotor 60 and two side walls which close off the interior space 56 at the face sides of the rotor 60 (and of which only the "rear" side wall 59 can be seen here), in each case one low-pressure chamber 70 is delimited.

In the exemplary embodiment shown, since five rotary vanes 66 are present, it is also the case that five low-pressure chambers 70 are formed. The volume of each individual low-pressure chamber, for one rotation of the rotor 60 through 360°, changes from a minimum value (when the low-pressure chamber 70 is approximately at the 6 o'clock position) via a maximum value (when the low-pressure chamber 70 is approximately at the 12 o'clock position) and back to the minimum value.

Hydraulic fluid is fed to the low-pressure chambers 70 through the inlet 72. Said inlet, as seen in the direction of rotation of the rotor 60, is situated behind the point at which the spacing between the outer surface of the rotor 60 and the inner wall 58 of the stator 54 is minimal.

The hydraulic fluid drawn in by the low-pressure chambers 70 via the inlet 72 is delivered via a low-pressure outlet 74, which, as seen in the peripheral direction, is behind the position at which the low-pressure chambers 70 have the maximum volume, but in front of the position at which the spacing between the outer side of the rotor 60 and the inner wall 58 of the stator 54 is minimal.

The inlet 72 and the low-pressure outlet 74 are arranged here in one of the side walls 59 of the hydraulic pump 16 or else, so as to improve the filling, in both side walls 59, so that the hydraulic fluid can be drawn into the low-pressure chamber 70, and pushed out therefrom, from both sides.

Each of the rotary vanes 66 delimits together with the rotor 60 (and also the side walls 59) in each case one high-pressure chamber 76. Specifically, each radially inner side 78 of each rotary vane 66 delimits, together with the walls of the receptacle 64 and the side walls 59 shown, in each case one high-pressure chamber 76.

The volume of the high-pressure chambers 76 changes according to the displacement of the rotary vanes 66 in the receptacles 64. When the rotary vanes 66 move outwards (that is to say during a movement from the 6 o'clock position to the 12 o'clock position via the 3 o'clock position in the exemplary embodiment shown), the volume of the high-pressure chambers 76 increases, and when the rotary vanes 66 move inwards (that is to say during a movement from the 12 o'clock position to the 6 o'clock position via the 9 o'clock position), the volume decreases.

In this way, there is formed a piston pump in which the radially inner side 78 of each rotary vane 66 may be regarded as the face surface of a pump piston which is adjusted by means of a curved path (of the inner wall 58 of the stators 54). For drawing-in, the pump piston is adjusted outwards under the action of centrifugal force, and for pushing-out, the pump piston is displaced inwards owing to the contour of the inner wall 58 of the stator 54.

The high-pressure chamber 76 draws in via the same inlet 72 as that which provides a supply to the low-pressure chambers 70.

A high-pressure outlet 80 which is separate from the low-pressure outlet 74 is provided on the pressure side of the high-pressure pump. In the peripheral direction, said high-pressure outlet is arranged approximately at the same position as the low-pressure outlet 74.

The high-pressure outlet 80 may be provided either at only one of the side walls 59 of the stator 54 (and thus also of the rotor 60) or at both face sides.

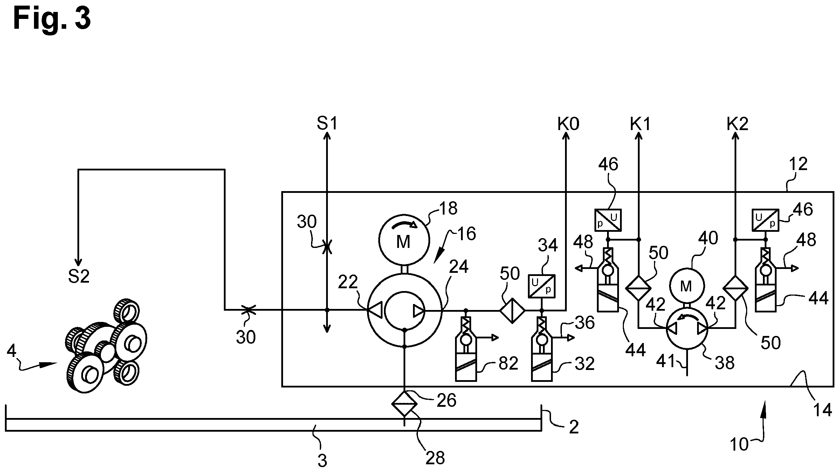

Figure 3 shows a second embodiment. The same reference signs are used for the components known from the first embodiment, and, in this respect, reference is made to the explanations above.

The difference between the first and second embodiments is that, in the second embodiment, a disconnection valve 82 is arranged between the high-pressure outlet 24 of the dual pump 16 and the first control valve 32. The disconnection valve 82 serves, in the open state, to discharge directly into the internal fluid reservoir 14 the hydraulic fluid that is conveyed by the dual pump 16 at the high-pressure port 24, without said hydraulic fluid having to flow through the control valve 32. In this way, the energy required for driving the dual pump 16 can be reduced in the phases in which, at the first high-pressure port K0, the fluid pressure can be maintained by the proportional valve alone.

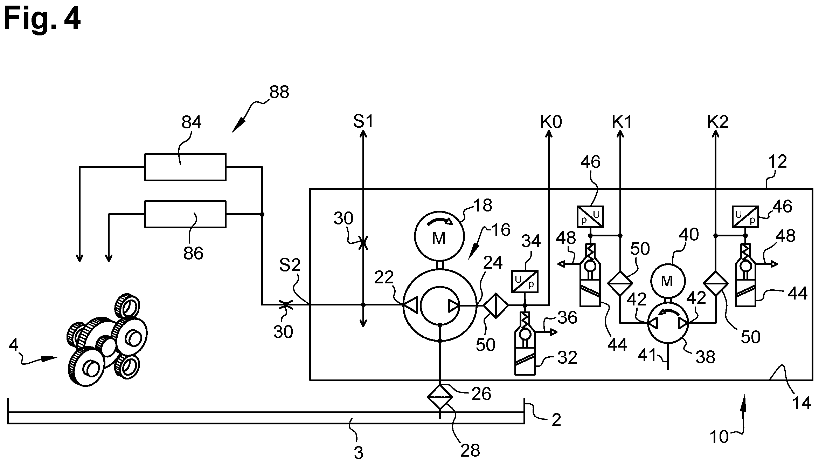

Figure 4 shows a third embodiment. The same reference signs are used for the components known from the preceding embodiments, and, in this respect, reference is made to the explanations above.

The difference between the first and the third embodiment consists in that, in the third embodiment, the lubricant flow that is provided at the lubricant/coolant port S2 is used for cooling a stator 84 and a rotor 86 of an electric motor, which is symbolized here merely by the stator 84 and the rotor 86. The hydraulic oil subsequently passes to the bearing points and tooth meshing points of the transmission gearwheels 4.

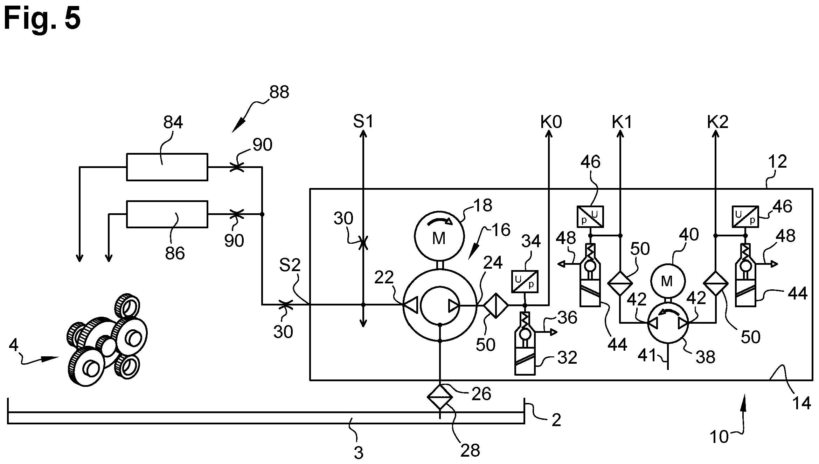

Figure 5 shows a fourth embodiment. The same reference signs are used for the components known from the preceding embodiments, and reference is made to the explanations above.

The difference between the third and the fourth embodiment consists in that, in the fourth embodiment, restrictors 90 are provided, by means of which the volumetric flow rate through the stator 84 and the rotor 86 can be suitably set. In particular, a relatively large proportion of the volumetric flow rate is conducted through the stator, because more heat is generated there.

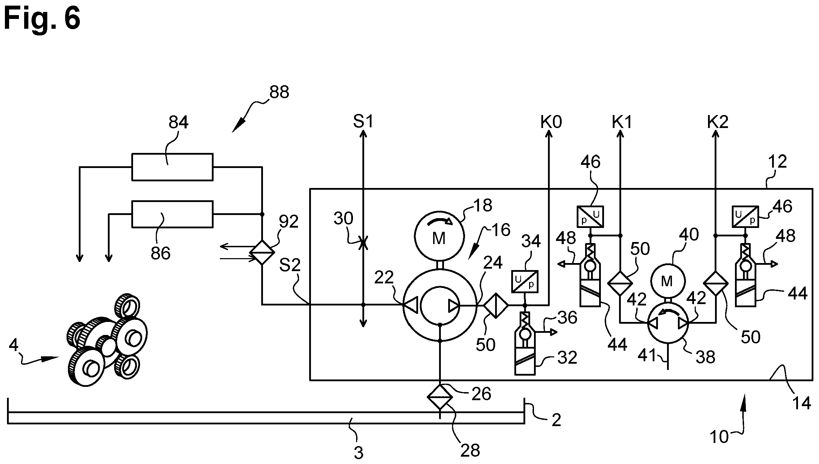

Figure 6 shows a fifth embodiment. The same reference signs are used for the components known from the preceding embodiments, and, in this respect, reference is made to the explanations above.

The difference between the fifth and the fourth embodiment consists in that, in the fifth embodiment, a heat exchanger 92 is provided between the lubricant/coolant port S2 and the electric motor 88, by means of which heat exchanger the temperature of the hydraulic oil used for cooling the electric motor 88 is reduced. This has a particularly advantageous effect on the efficiency of the electric motor 88.

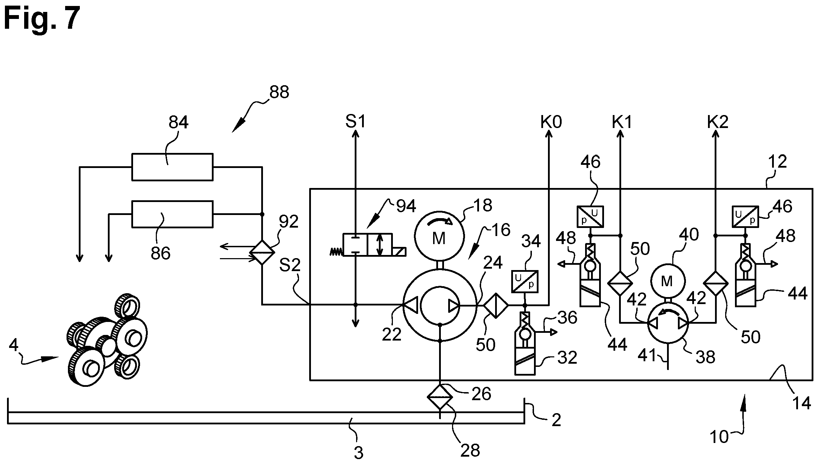

Figure 7 shows a sixth embodiment. The same reference signs are used for the components known from the preceding embodiments, and, in this respect, reference is made to the explanations above.

The difference between the sixth and the fifth embodiment consists in that, in the sixth embodiment, a shut-off valve 94 is provided which is arranged between the low-pressure outlet 22 of the dual pump 16 and the first lubricant/coolant port S1.

By means of the shut-off valve 94, the separating clutch to which cooling medium is supplied via the lubricant/coolant port S1 can be cooled in accordance with demand. After an actuation, the shut-off valve 94 is opened for a period of typically 15-30 seconds, such that the desired cooling action is attained. The shut-off valve 94 is subsequently closed again. In this way, drag losses in the open state of the separating clutch can be prevented.

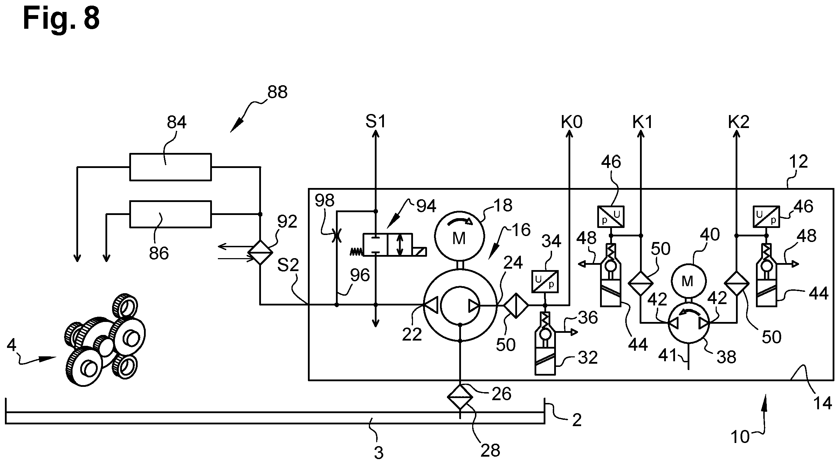

Figure 8 shows a seventh embodiment. The same reference signs are used for the components known from the preceding embodiments, and, in this respect, reference is made to the explanations above.

The difference between the sixth and the seventh embodiment consists in that, in the seventh embodiment, a bypass line 96 for the shut-off valve 94 is provided. An aperture 98 may be arranged in said bypass line. By means of the bypass line 96, it is ensured that a minimum volumetric flow rate via the lubricant/coolant port S1 is provided even in the closed state of the shut-off valve 94. This is expedient if a wet clutch with internally situated rotating pistons is involved; these require constant lubrication. Furthermore, it is possible in this way for the hydraulic compensation chambers that are required in this clutch type for compensating the centrifugal forces of the rotating oil to be kept in a filled state.

The particular advantage of a restrictor 98 consists in that it acts virtually independently of viscosity. The desired volumetric flow rate can thus be ensured independently of the temperature of the hydraulic oil.

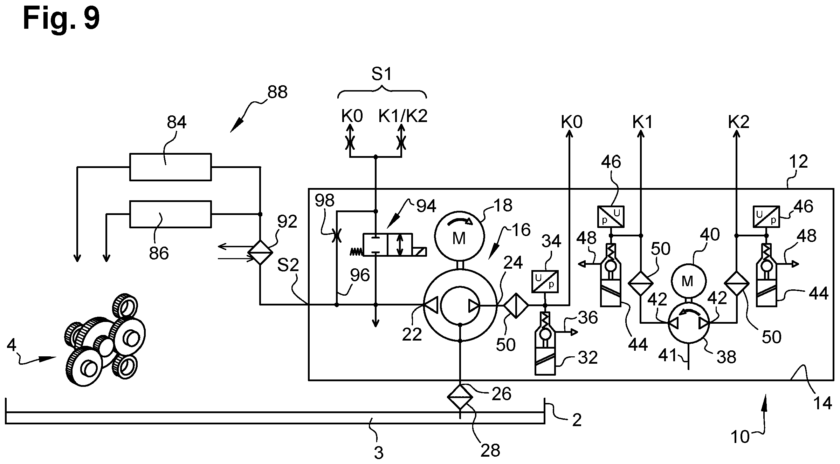

Figure 9 shows an eighth embodiment. The same reference signs are used for the components known from the preceding embodiments, and, in this respect, reference is made to the explanations above.

The difference between the eighth and the seventh embodiment consists in that, in the eighth embodiment, the cooling oil flow that is provided via the port S1 is divided into two separate cooling oil flows for the separating clutch (port K0) and the two dual clutches (ports K1, K2). Here, the volumetric flow rate can be suitably set by means of restrictors.

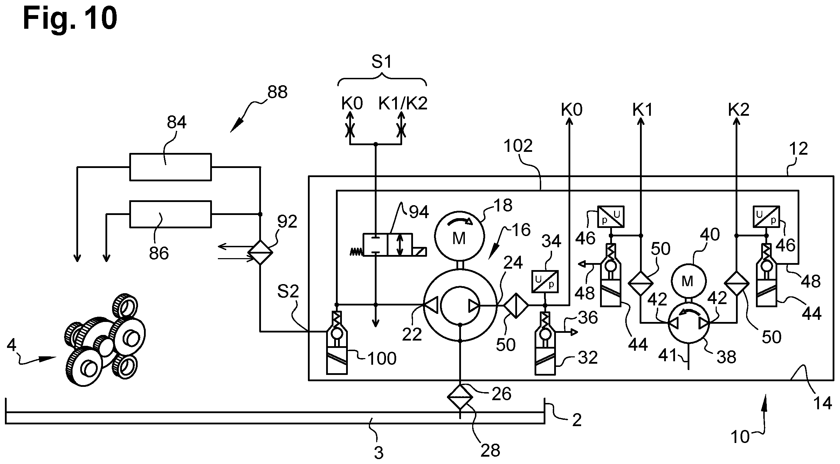

Figure 10 shows a ninth embodiment. The same reference signs are used for the components known from the preceding embodiments, and, in this respect, reference is made to the explanations above.

The difference between the ninth embodiment and the eighth embodiment consists in that, in the ninth embodiment, a build-up valve 100 is provided between the low-pressure outlet 22 of the dual pump 16 and the second lubricant/coolant port S2.

If the build-up valve 100 is open, a supply is provided to the port S2, similarly to the situation in the preceding embodiments.

If the build-up valve 100 is closed, the volumetric flow rate of the low-pressure outlet 22 of the dual pump 16 is conducted via a build-up line 102 to the return lines 48 of the control valves 44. This makes it possible for flow to pass through the control valves 44 "backwards", and thus for the clutch actuators that are connected to the high-pressure ports K1, K2 to be pre-filled in a very short time. In this way, in the presence of a shift demand, the corresponding clutches can be brought into the vicinity of the "biting point" very quickly. The control valves 44 subsequently take over the actuation of the clutches in order to control the transfer of the torque from one clutch to the other clutch. For this purpose, the high-pressure fluid provided via the high-pressure outlets 42 of the high-pressure pump 38 is then required.

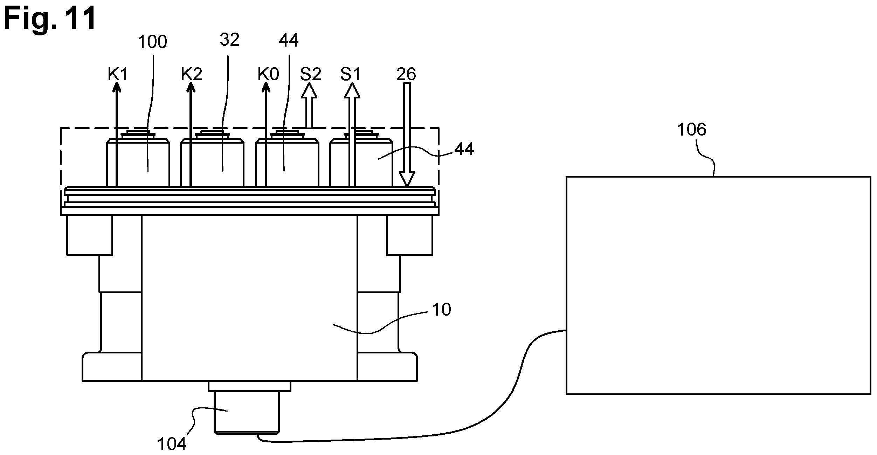

Figure 11 schematically shows a pump unit 10 that can be attached as a complete unit to a transmission housing (not shown in any more detail here). The control valves 32, 44, 100 protrude outwardly out of the pump unit 10, such that they can be directly cooled by the oil in the transmission. Visible on the rear side of the pump unit 10 is a connector plug 104 by means of which the pump unit 10 can be connected to a motor and/or transmission controller. The pump unit 10 can also perform the further actuation of other components, for example of a module 106 (shown here schematically) for transmission actuation.

## Claims

1. Pump unit (10) having a dual pump (16) which has a suction port (26) for drawing in from an external fluid reservoir (3) and has a high-pressure outlet (24) and a low-pressure outlet (22) which lead to a first control port (K0) and to at least one lubricant/coolant port (S1, S2), respectively, of the pump unit (10), and having a high-pressure pump (38) which draws in from an internal fluid reservoir (14) and which has two high-pressure outlets (42) which lead to a second and a third control port (K1, K2) of the pump unit (10), wherein, between the high-pressure outlet (24) of the dual pump (16) and the first control port (K0), there is arranged a control valve (32) which has a return line (36) which leads into the internal fluid reservoir (14).

2. Pump unit (10) according to Claim 1, **characterized in that** the suction port (26) of the pump unit (10) and/or the high-pressure outlet (24) of the dual pump (16) is assigned a filter (50).

3. Pump unit according to Claim 1 or Claim 2, **characterized in that** the dual pump (16) is a rotary vane pump having multiple rotary vanes (66) which, together with a stator (54) and a rotor (60), delimit multiple low-pressure chambers (70), wherein each rotary vane (66) delimits a high-pressure chamber (76) within the rotor.

4. Pump unit according to any one of the preceding claims, **characterized in that** a disconnection valve (82) is provided which is arranged between the high-pressure outlet (24) of the dual pump (16) and the control valve (32) of the first control port (K0) of the pump unit (10) and the return line of which leads into the internal fluid reservoir (14).

5. Pump unit according to any one of the preceding claims, **characterized in that** a shut-off valve (94) is provided which is arranged between the low-pressure outlet (22) of the dual pump (16) and one of the lubricant/coolant ports (S0, S1) of the pump unit (10).

6. Pump unit according to Claim 5, **characterized in that** a bypass line (96) for the shut-off valve (94) is provided, wherein an aperture (98) is arranged in the bypass line.

7. Pump unit according to any one of the preceding claims, **characterized in that**, between the low-pressure outlet (22) of the dual pump (16) and one of the lubricant/coolant ports (S0, S1), there is arranged a build-up valve (100), the outlet of which is connected to the return lines (48) of control valves (44) that are arranged between one of the high-pressure outlets (42) of the high-pressure pump (38) and the second and third control port (K1, K2) respectively.

8. Drive assembly having a transmission (4), having a separating clutch by means of which an electric motor can be coupled to and separated from the transmission (4), and having a pump unit (10) according to any one of the preceding claims, wherein the suction port (26) of the pump unit (10) is connected to an oil collecting volume (3) of the transmission (4), and one of the lubricant/coolant ports (S0, S1) is used for the cooling of the rotor (86) and of the stator (84).

9. Drive assembly according to Claim 8, **characterized in that** one of the lubricant/coolant ports (S0, S1) is assigned a heat exchanger (92).

10. Drive assembly according to either of Claims 8 and 9, **characterized in that** the low-pressure outlet (22) of the dual pump (16) provides a supply to at least two lubricant/coolant ports (S0, S1), and **in that** at least one of the lubricant/coolant circuits to which a supply is thereby provided is assigned a restrictor (30) or an aperture (30).

## Patentansprüche

1. Pumpenaggregat (10) mit einer Dualpumpe (16), die einen Sauganschluss (26) zum Ansaugen aus einem externen Fluidvorratsbehälter (3) aufweist sowie einen Hochdruckausgang (24) und einen Niederdruckausgang (22), die zu einem ersten Steueranschluss (K0) bzw. mindestens einem Schmier-/Kühlmittelanschluss (S1, S2) des Pumpenaggregats (10) führen, und mit einer Hochdruckpumpe (38), die aus einem internen Fluidvorratsbehälter (14) ansaugt und zwei Hochdruckausgänge (42) aufweist, die zu einem zweiten und einem dritten Steueranschluss (K1, K2) des Pumpenaggregats (10) führen, wobei zwischen dem Hochdruckausgang (24) der Dualpumpe (16) und dem ersten Steueranschluss (K0) ein Steuerventil (32) angeordnet ist, das einen Rücklauf (36) aufweist, der in den internen Fluidvorratsbehälter (14) führt.

2. Pumpenaggregat (10) nach Anspruch 1, **dadurch gekennzeichnet, dass** dem Sauganschluss (26) des Pumpenaggregats (10) und/oder dem Hochdruckausgang (24) der Dualpumpe (16) ein Filter (50) zugeordnet ist.

3. Pumpenaggregat nach Anspruch 1 oder Anspruch 2, **dadurch gekennzeichnet, dass** die Dualpumpe (16) eine Drehschieberpumpe mit mehreren Drehschiebern (66) ist, die zusammen mit einem Stator (54) und einem Rotor (60) mehrere Niederdruckkammern (70) abgrenzt, wobei jeder Drehschieber (66) innerhalb des Rotors eine Hochdruckkammer (76) abgrenzt.

4. Pumpenaggregat nach einem der vorhergehenden Ansprüche, **dadurch gekennzeichnet, dass** ein Freischaltventil (82) vorgesehen ist, das zwischen dem Hochdruckausgang (24) der Dualpumpe (16) und dem Steuerventil (32) des ersten Steueranschlusses (K0) des Pumpenaggregats (10) angeordnet ist und dessen Rücklauf in den internen Fluidvorratsbehälter (14) führt.

5. Pumpenaggregat nach einem der vorhergehenden Ansprüche, **dadurch gekennzeichnet, dass** ein Abschaltventil (94) vorgesehen ist, das zwischen dem Niederdruckausgang (22) der Dualpumpe (16) und einem der Schmier-/ Kühlmittelanschlüsse (S0, S1) des Pumpenaggregats (10) angeordnet ist.

6. Pumpenaggregat nach Anspruch 5, **dadurch gekennzeichnet, dass** eine Bypass-Leitung (96) für das Abschaltventil (94) vorgesehen ist, wobei in der Bypass-Leitung eine Blende (98) angeordnet ist.

7. Pumpenaggregat nach einem der vorhergehenden Ansprüche, **dadurch gekennzeichnet, dass** zwischen dem Niederdruckausgang (22) der Dualpumpe (16) und einem der Schmier-/Kühlmittelanschlüsse (S0, S1) ein Aufstauventil (100) angeordnet ist, dessen Ausgang mit den Rückläufen (48) von Steuerventilen (44) verbunden ist, die zwischen einem der Hochdruckausgänge (42) der Hochdruckpumpe (38) und dem zweiten bzw. dritten Steueranschluss (K1, K2) angeordnet sind.

8. Antriebsbaugruppe mit einem Getriebe (4), einer Trennkupplung, mit der ein Elektromotor mit dem Getriebe (4) gekoppelt bzw. von diesem getrennt werden kann, und einem Pumpenaggregat (10) nach einem der vorhergehenden Ansprüche, wobei der Sauganschluss (26) des Pumpenaggregats (10) mit einem Ölsammelvolumen (3) des Getriebes (4) in Verbindung steht und einer der Schmier-/Kühlmittelanschlüsse (S0, S1) zum Kühlen des Rotors (86) und des Stators (84) verwendet wird.

9. Antriebsbaugruppe nach Anspruch 8, **dadurch gekennzeichnet, dass** einem der Schmier-/Kühlmittelanschlüsse (S0, S1) ein Wärmetauscher (92) zugeordnet ist.

10. Antriebsbaugruppe nach einem der Ansprüche 8 und 9, **dadurch gekennzeichnet, dass** der Niederdruckausgang (22) der Dualpumpe (16) mindestens zwei Schmier-/Kühlmittelanschlüsse (S0, S1) versorgt und dass mindestens einem der davon versorgten Schmier-/Kühlmittelkreise eine Drossel (30) oder eine Blende (30) zugeordnet ist.

## Revendications

1. Unité de pompe (10) comportant une pompe double (16) dotée d'un orifice d'aspiration (26) pour aspirer à partir d'un réservoir de fluide externe (3) et d'une sortie haute pression (24) et d'une sortie basse pression (22) qui aboutissent à un premier orifice de commande (K0) et à au moins un orifice de lubrifiant/liquide de refroidissement (S1, S2), respectivement, de l'unité de pompe (10), et comportant une pompe haute pression (38) qui aspire dans un réservoir de fluide interne (14) et qui a deux sorties haute pression (42) qui mènent à un deuxième et un troisième orifice de commande (K1, K2) de l'unité de pompe (10), entre la sortie haute pression (24) de la pompe double (16) et le premier orifice de commande (K0), une soupape de commande (32) étant disposée et comportant une conduite de retour (36) qui aboutit au réservoir de fluide interne (14).

2. Unité de pompe (10) selon la revendication 1, **caractérisée en ce que** l'orifice d'aspiration (26) de l'unité de pompe (10) et/ou la sortie haute pression (24) de la pompe double (16) est équipé d'un filtre (50).

3. Unité de pompe selon la revendication 1 ou la revendication 2, **caractérisée en ce que** la pompe double (16) est une pompe à palettes rotatives comportant plusieurs palettes rotatives (66) qui, avec un stator (54) et un rotor (60), délimitent plusieurs chambres à basse pression (70), chaque palette rotative (66) délimitant une chambre à haute pression (76) à l'intérieur du rotor.

4. Unité de pompe selon l'une quelconque des revendications précédentes, **caractérisée en ce qu'**une soupape de déconnexion (82) est disposée entre la sortie haute pression (24) de la pompe double (16) et la soupape de commande (32) du premier orifice de commande (K0) de l'unité de pompe (10) et dont la conduite de retour aboutit dans le réservoir de fluide interne (14).

5. Unité de pompe selon l'une quelconque des revendications précédentes, **caractérisée en ce qu'**une vanne d'arrêt (94) est disposée entre la sortie basse pression (22) de la pompe double (16) et l'un des orifices de lubrifiant/liquide de refroidissement (S0, S1) de l'unité de pompe (10).

6. Unité de pompe selon la revendication 5, **caractérisée en ce qu'**une conduite de dérivation (96) pour la vanne d'arrêt (94) est fournie, une ouverture (98) étant pratiquée dans la conduite de dérivation.

7. Unité de pompe selon l'une quelconque des revendications précédentes, **caractérisée en ce que**, entre la sortie basse pression (22) de la pompe double (16) et l'un des orifices de lubrifiant/liquide de refroidissement (S0, S1), est disposée une soupape d'accumulation (100) dont la sortie est reliée aux conduites de retour (48) des soupapes de commande (44) qui sont disposées entre l'une des sorties haute pression (42) de la pompe haute pression (38) et les deuxième et troisième orifices de commande (K1, K2), respectivement.

8. Ensemble d'entraînement comportant une transmission (4), comportant un embrayage de séparation au moyen duquel un moteur électrique peut être accouplé à la transmission (4) et séparée de celle-ci, et comportant une unité de pompe (10) selon l'une quelconque des revendications précédentes, l'orifice d'aspiration (26) de l'unité de pompe (10) étant relié à un volume collecteur d'huile (3) de la transmission (4), et l'un des orifices de lubrifiant/liquide de refroidissement (S0, S1) étant utilisé pour le refroidissement du rotor (86) et du stator (84) .

9. Ensemble d'entraînement selon la revendication 8, **caractérisé en ce que** l'un des orifices de lubrifiant/liquide de refroidissement (S0, S1) est affecté à un échangeur de chaleur (92).

10. Ensemble d'entraînement selon l'une des revendications 8 et 9, **caractérisé en ce que** la sortie basse pression (22) de la pompe double (16) alimente au moins deux orifices de lubrifiant/liquide de refroidissement (S0, S1), et **en ce qu'**au moins l'un des circuits de lubrifiant/liquide de refroidissement ainsi alimenté est doté d'un restricteur (30) ou d'une ouverture (30).
